# EUROPÄISCHE PATENTANMELDUNG

(11) **EP 1 894 827 A2**
(43) Veröffentlichungstag der Anmeldung: **05.03.2008**
(21) Anmeldenummer: 07114183.2
(22) Anmeldetag: 10.08.2007
(51) Int. Cl.: B62K 19/16, B62K 21/02

(54) **Fahrradgabel sowie Verfahren zur Herstellung einer Fahrradgabel**

(30) Priorität: 30.08.2006 DE 102006040522
(71) Anmelder: Canyon Bicycles GmbH, 56073 Koblenz (DE)
(72) Erfinder: Scheffer, Lutz, 82467 Garmisch-Partenkirchen (DE)
(74) Vertreter: von Kirschbaum, Alexander

(57) **Zusammenfassung**

Eine Fahrradgabel aus kohlenstofffaserverstärktem Kunststoff weist einen Gabelschaft (10) auf, der unabhängig von einem Gabelelement (12) hergestellt ist. Das Gabelelement (12) umfasst zwei Gabelbeine (20) sowie eine Gabelbrücke (22). Die beiden gesondert hergestellten Teile der Fahrradgabel werden anschließend miteinander verbunden. Durch das gesonderte Herstellen der beiden Elemente der Fahrradgabel, können die Fasern des Verbundwerkstoffs unidirektional angeordnet werden. Hierdurch ist eine Fahrradgabel mit hoher Festigkeit und Steifigkeit geschaffen, die ferner äußerst leicht ist. Ferner ist ein Verfahren zu Herstellung einer derartigen Gabel beschrieben.

## Beschreibung

Die Erfindung betrifft eine Fahrradgabel aus im wesentlichen einem Faserkunststoffverbund-Material. Vorzugsweise handelt es sich bei dem Werkstoff um kohlenfaserverstärkten Kunststoff. Ferner betrifft die Erfindung ein Verfahren zum Herstellen einer Fahrradgabel aus Faserkunststoffverbund-Material.

Zur Verringerung des Gewichts von Fahrrädern, insbesondere Rennrädern und Mountenbikes, ist es bekannt, Fahrradrahmen und Fahrradgabeln aus einem Faserkunststoffverbund herzustellen. Aus einem Faserkunststoffverbund hergestellte Fahrradgabeln werden in Integralbauweise, d. h. in einem Stück hergestellt. Hierzu werden insbesondere mit Harz vorimprägnierte Faserhalbzeuge, sogenannte Prepregs, verwendet. Die Faserhalbzeuge sind zugeschnitten und werden um aufblasbare Schläuche herum angeordnet. Die derart aus dem Faserlaminat hergestellte Fahrradgabel wird in ein üblicherweise zweiteiliges Werkzeug gelegt. Nach dem Verschließen des Werkzeuges werden die Schläuche aufgeblasen und das Werkzeug erwärmt. Hierdurch härtet die aus Faserlaminat hergestellte Fahrradgabel aus, wobei durch das Aufblasen der Schläuche das Material gegen die Innenseite der Werkzeugwandung gedrückt wird. Besonders kritisch ist bei einer in Intergralbauweise hergestellten Fahrradgabel der Übergangsbereich zwischen Gabelbrucke und Gabeischaft. In diesem Bereich gehen die beiden Gabelbeine in den Gabelschaft über. Um eine ausreichende Stabilität in diesem Bereich auch bei aus Faserkunststoffverbund-Material hergestellten Fahrradgabeln zu erzielen, muss eine Vielzahl gesondert zugeschnittener kleiner Prepregs angeordnet werden. Die einzelnen Prepregs müssen einander überlagernd angeordnet werden, so dass die auftretenden Kräfte übertragen werden können. Eine zur Aufnahme und Übertragung von Kräften bevorzugte, nicht unterbrochene Faserstruktur ist somit nicht möglich. Die Herstellung mit einer Vielzahl einzelner Prepregs ist aufwendig und fehleranfällig. Ein weiterer Nachteil besteht darin, dass beim Aushärten der Fahrradgabel ein Verschieben der einzelnen Prepregs im Bereich des Übergangs zwischen dem Gabelschaft und dem Gabelkopf erfolgen kann. Hierdurch wird die Tragfähigkeit vermindert. Die Integralbauweise von aus Faserkurtststoffverbund-Material hergestellten Fahrradgabeln ist somit äußerst aufwendig und teuer.

Aufgabe der Erfindung ist es, eine Fahrradgabel aus im wesentlichen Faserkunststoffverbund-Material zu schaffen, deren Herstellungskosten bei hoher Zuverlässigkeit reduziert werden können.

Die Lösung der Aufgabe erfolgt erfindungsgemäß durch eine Fahrradgabel gemäß Anspruch 1, bzw. ein Verfahren zur Herstellung einer Fahrradgabel gemäß Anspruch 13.

Ein wesentlicher Aspekt der Erfindung besteht darin, dass der Gabelschaft unabhängig von einem Gabelelement, das die Gabelbeine sowie die Gabelbrücke umfasst, hergestellt wird. Die erfindungsgemäße Fahrradgabel wird somit zunächst aus zwei gesondert hergestellten Einzelteilen hergestellt, die sodann miteinander verbunden werden. Hierbei wird der Gabelschaft, bei dem es sich insbesondere um ein rohrförmiges Bauteil handelt, im wesentlichen aus einem Faserkunststoffverbund-Material, insbesondere kohlenstoffverstärktem Kunststoff hergestellt. Das Gabelelement, das die beiden Gabelbeine und die Gabelbrücke umfasst, ist im wesentlichen ebenfalls rohrförmig, wobei sich der Querschnitt des Gabelelementes selbstverständlich ändern kann. Das Gabelelement ist ebenfalls im wesentlichen aus Faserkunststoffverbund-Material, insbesondere aus kohlenstoffverstärktem Kunststoff hergestellt. Insbesondere weisen sowohl der Gabelschaft, als auch das Gabelelement ausschließlich Faserkunststoffverbund-Material auf. Ggf. sind allenfalls zusätzliche Verstärkungselemente vorgesehen.

Die erfindungsgemäße Fahrradgabel ist somit bei einer hohen Festigkeit und Steifigkeit äußerst leicht.

Erfindungsgemäß ist die Fahrradgabel somit in dem, bei der Herstellung einer Fahrradgabel aus einem Faserkunststoffverbund-Material, kritischen Bereich für die Herstellung getrennt. Hierdurch ist es möglich, die Fasern sowohl im Gabelschaft, als auch im Gabelelement im wesentlichen unidirektional anzuordnen. Vorzugsweise sind sämtliche Fasern unidirektional angeordnet. Ggf. können zusätzlich Querversteifungselemente, wie ringförmige Elemente, vorgesehen sein. Durch die Trennung der Fahrradgabel in zwei Bauteile ist die Herstellung erheblich vereinfacht und somit die Herstellungskosten deutlich reduziert.

Die Verbindung der beiden Bauteile kann durch Verkleben erfolgen. Das Vorsehen einer großen Anzahl von gesondert zugeschnittenen Prepregs im Übergangsbereich zwischen Gabelschaft und Gabelbrücke ist nicht erforderlich. Ggf. kann insbesondere zusätzlich zum Verkleben der beiden Bauteile Fasermaterial in diesem Bereich angeordnet werden. Dies erfolgt insbesondere über zugeschnittene Prepregs, wobei die Anzahl und die Masse der Prepregs erheblich geringer ist, als bei in Integralbauweise hergestellten Fahrradgabeln. Dies liegt darin begründet, dass die entsprechenden Prepregs lediglich zur Verbindung der beiden Bauteile, nicht jedoch zur Ausbildung der Bauteile selbst dienen.

Ebenso kann das Verbindungselement derart ausgebildet sein, dass es mit der Gabelbrücke, beispielsweise durch Kleben verbunden ist, und in einen zumindest in diesem Bereich hohl ausgebildeten Gabelschaft ragt. Auch eine Kombination eines derartigen innenliegenden Verbindungselements mit einem außenliegenden Verbindungselement ist möglich. Ein außenliegendes Verbindungselement umgibt vorzugsweise ein in Richtung der Gabelbrücke weisendes Ende des Gabelschafts zumindest teilweise, vorzugsweise vollständig. Ferner erstreckt sich ein derartiges Verbindungselement in einen Verbindungsbereich der Gabelbrücke. Der Verbindungsbereich der Gabelbrücke grenzt in verbundenem Zustand unmittelbar an das in Richtung der Gabelbrücke weisende Ende des Gabelschafts an.

Besonders bevorzugt ist es, dass ein außenliegendes und/oder ein innenliegendes Verbindungselement Faserkunststoffverbund-Material aufweist, insbesondere ausschließlich aus derartigem Material hergestellt ist.

Die Gabelbrücke, die die beiden Gabelbeine verbindet, weist vorzugsweise im gesamten Bereich eine glatte Außenkontur auf. Insbesondere ist die Außenkontur der Gabelbrücke konvex, wobei die Gabelbrücke vorzugsweise über den gesamten Querschnitt stetig gekrümmt oder gerade ist. Dies ist insbesondere bei einem kreisringförmigen, ovalen oder elliptischen Querschnitt gegeben. Hierdurch ist das Auftreten von Spannungsspitzen auf Grund von scharfen Kanten bzw. einem unstetigen Verlauf vermieden. Hierdurch ist die Stabilität deutlich verbessert. Insbesondere ist die Gabelbrücke als Segment eines Torus ausgebildet. Zur verbesserten Verbindung zwischen dem Gabelschaft und dem Gabelelement bzw. der Gabelbrücke des Gabelelements weist der Gabelschaft einen die Gabelbrücke teilweise überlappenden Ansatz auf. Vorzugsweise weist der Gabelschaft zwei insbesondere einander gegenüberliegende Ansätze auf, die jeweils die Gabelbrücke in montiertem Zustand überlappen. Die beiden Ansätze sind bezogen auf die Fahrtrichtung der Gabel vorzugsweise vor und hinter der Gabelbrücke angeordnet. Hierdurch ist die Übertragung der Drehbewegung des Gabelschafts, die beim Lenken auftritt, auf die Gabelbeine verbessert. Insbesondere ist das in Richtung der Gabelbrücke weisende Ende des Gabelschafts derart ausgeformt, dass die in Richtung der Gabelbrücke weisenden äußeren Kanten bzw. Ränder des Gabelschafts an der Gabelbrücke anliegen. Die Ausnehmung des Gabelschafts ist somit vorzugsweise komplementär zur Außenkontur der Gabelbrücke im Bereich der Verbindung zwischen Gabelschaft und Gabelbrücke ausgebildet.

Die Fasern des Faserkunststoffverbund-Materials verlaufen im Gabelschaft, vorzugsweise im wesentlichen in Längsrichtung. Hierdurch kann eine hohe Steifigkeit des Gabelschafts erzielt werden. Insbesondere verlaufen mehr als 80% der Fasern in Längsrichtung des Gabelschafts. Bevorzugt ist es, zusätzliche Fasern entsprechend einer Helix bzw. schraubenlinienförmig im Gabelschaft anzuordnen.

Die Fasern des Faserkunststoffverbund-Materials verlaufen vorzugsweise im Gabelelement von einem Gabelbeinende durch die Gabelbeinbrücke zu dem anderen Gabelbeinende. Auf Grund des nicht unterbrochenen Faserverlaufs kann eine gute Kraftaufnahme und Kraftübertragung verwirklicht werden.

Vorzugsweise ist der Gabelschaft und/oder das Gabelelement rohrförmig ausgebildet und insbesondere hohl.

Der Außenumfang des Gabelschafts nimmt vorzugsweise in Richtung der Gabelbrücke zu, um eine gute Kraftübertragung zu ermöglichen. In besonders bevorzugter Ausführungsform ist der Gabelschaft in dem unteren, in Richtung der Gabelbrücke weisenden Bereich kegelstumpfförmig ausgebildet. In dem oberen Bereich, in dem die Lenkkopflager aufgenommen werden, ist der Gabelschaft vorzugsweise kreis-zylindrisch ausgebildet.

Die Gabelbeinenden können einstückig mit Ausfallend-Elementen, die zur Befestigung des Laufrades dienen, verbunden sein. Vorzugsweise sind die Ausfallend-Elemente gesondert hergestellt und mit den Gabelbeinenden verbunden, insbesondere verklebt. Die Ausfallend-Elemente können insbesondere aus Gewichtsgründen ebenfalls aus einem Faserkunststoffverbund-Material, insbesondere kohlenstofffaserverstärktem Kunststoff, hergestellt sein. In besonders bevorzugter Ausführungsform weisen die Ausfallend-Elemente einen zylindrischen Ansatz auf, der zum Verbinden in die Gabelbeinenden eingesteckt ist. Hierbei weist der zylindrische Ansatz beispielsweise einen kreisrunden oder ovalen Querschnitt auf.

Gemäß dem erfindungsgemäßen Verfahren zur Herstellung einer Fahrradgabel aus Faserkunststoffverbund-Material, bei dem es sich vorzugsweise um kohlenstofffaserverstärkten Kunststoff handelt, werden der Gabelschaft und das Gabelelement gesondert hergestellt. Hierzu wird der Gabelschaft und das Gabelelement, welches wiederum die Gabelbrücke und die Gabelbeine umfasst, aus Faserlaminat hergestellt. Anschließend erfolgt ein Verbinden des Gabelschafts mit der Gabelbrücke des Gabelelements, beispielsweise durch Verkleben. Auch bei dem erfindungsgemäßen Verfahren zur Herstellung der Fahrradgabel besteht der wesentliche Aspekt darin, dass zwei gesonderte Bauteile hergestellt werden. Dies hat die vorstehend anhand der Fahrradgabel beschriebenen Vorteile.

Der Gabelschaft und/oder das Gabelelement werden vorzugsweise dadurch hergestellt, dass ein Kernelement mit Fasermaterial, insbesondere Prepregs umgeben wird. Anschließend wird das mit Fasermaterial umgebene Kernelement in ein beispielsweise zweiteiliges Formwerkzeug eingebracht, insbesondere eingelegt. Das anschließende Aushärten des Fasermaterials erfolgt vorzugsweise durch das Einbringen von Wärme, wobei auch ein langsames Aushärten in Umgebungstemperatur möglich ist. Anschließend wird der Gabelschaft, bzw. das Gabelelement dem Formwerkzeug entnommen. Vorzugsweise ist das Kernelement derart ausgebildet, dass während des Aushärtens Druckkräfte auf eine Innenseite des Gabelschafts, bzw. des Gabelelements aufgebracht werden können. Hierdurch werden Lufteinschlüsse vermieden und ein dichter Verbund des Fasermaterials ist gewährleistet. Besonders bevorzugt ist es, dass das Kernelement eine aufblasbare Luftkammer aufweist. Insbesondere ist das Kernelement schlauchförmig ausgebildet.

Das Verbinden des Gabelschafts mit dem Gabelelement kann durch Verkleben erfolgen. Vorzugsweise erfolgt ggf. zusätzlich zum Verkleben ein Aufbringen von Fasermaterial an dem in Richtung der Gabelbrücke weisenden Ende des Gabelschafts, sowie im Verbindungsbereich der Gabelbrücke. Dies erfolgt, wie vorstehend anhand der Fahrradgabel beschrieben, vorzugsweise durch die Verwendung von Prepregs. Um Lufteinschlüsse zu vermeiden und einen dichten Verbund herzustellen, wird vorzugsweise das zur Verbindung verwendete Fasermaterial mit Außendruck beaufschlagt. Dies kann durch das Vorsehen einer das Fasermaterial umgebenden, mit Druck beaufschlagbaren Manschette erfolgen.

Vorzugsweise werden die Ausfallend-Elemente gesondert hergestellt und sodann, wie vorstehend anhand der Fahrradgabel beschrieben, mit den Gabelbeinenden verbunden.

Das erfindungsgemäße Verfahren zur Herstellung einer Fahrradgabel ist vorzugsweise, wie anhand der Fahrradgabel beschrieben, bevorzugt weitergebildet.

Nachfolgend wird die Erfindung anhand einer bevorzugten Ausführungsform unter Bezugnahme auf die anliegenden Zeichnungen näher erläutert.

Es zeigen:
- Fig. 1: eine schematische, perspektivische Ansicht der gesondert hergestellten Einzelteile der Fahrradgabel, und
- Fig. 2: eine schematische, perspektivische Ansicht der miteinander verbundenen Einzelteile.

Ein Gabelschaft 10 ist im dargestellten Ausführungsbeispiel als gesondertes, unabhängiges Bauteil hergestellt. Dies gilt auch für ein Gabelelement 12, sowie für beiden Ausfallend-Elemente 14. Sämtliche Bauteile sind im dargestellten Ausführungsbeispiel aus einem Faserkunststoffverbund-Material, insbesondere kohlenstofffaserverstärktem Kunststoff hergestellt.

Der Gabelschaft 10 ist als hohles, rohrförmiges Bauteil ausgebildet und weist einen in einem Gabelrohr des Fahrradrahmens anzuordnenden Bereich 16 auf. Der Bereich 16 nimmt die Lenkkopflager auf. An dem Bereich 16 schließt sich ein kegelstumpfförmiger Bereich 18 an, so dass der Außenumfang des Gabelschafts 10 in Richtung des Gabelelements 12 zunimmt.

Das Gabelelement 12 weist zwei Gabelbeine 20 auf, die über eine bogenförmige Gabelbrücke 22 miteinander verbunden sind. Das Gabelelement 12 ist vorzugsweise ebenfalls rohrförmig ausgebildet und weist ausschließlich gerundete Übergänge auf. Hierdurch ist das Auftreten von Kraftspitzen an Kanten vermieden. Die einzelnen, vorzugsweise unidirektional ausgerichteten Fasern verlaufen hierbei vorzugsweise von einem Gabelbeinende 24 durch die Gabelbrücke 22 hin zu dem anderen Gabelbeinende 24.

Die Außenfläche des Gabelelements ist vorzugsweise stets gekrümmt und weist keine Kanten auf, um das Auftreten von Kraftspitzen zu vermeiden. Dies hat zur Folge, dass ein in Richtung der Gabelbrücke 22 weisendes Ende 26 des Gabelschafts 10 vorzugsweise entsprechend der Außenkontur der Gabelbrücke 22 in dem Verbindungsbereich insbesondere komplementär zu diesem ausgebildet ist.

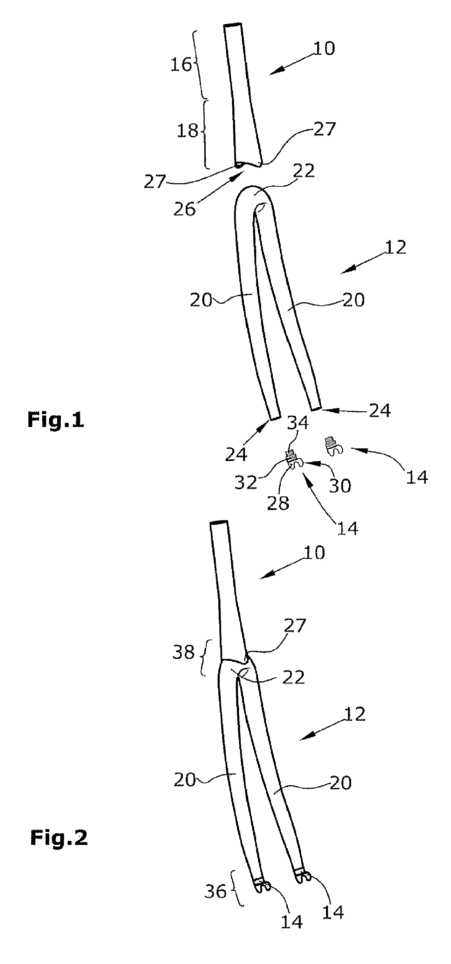

An dem in Richtung der Gabelbrücke 22 weisenden Ende 26 des Gabelschafts 10 sind zwei Ansätze 27 vorgesehen. Diese überlappen die Gabelbrücke 22 in montiertem Zustand teilweise (Fig. 2).

Die Ausfallend-Elemente 14 sind vorzugsweise ebenfalls aus einem Faserkunststoffverbund-Material hergestellt. Die Ausfallend-Elemente 14 weisen eine ebene Anlagefläche 28 auf, an dem beispielsweise die Mutter oder der Schnellspanner zur Befestigung des Laufrades anliegt. An das die Fläche 28 aufweisende Aufnahmeelement 30 schließt sich ein im Querschnitt vorzugsweise kreis-zylindrisch ausgebildetes Übergangselement 32 an. Das Übergangselement 32 weist vorzugsweise einen Außenquerschnitt auf, der dem Außenquerschnitt der Gabelenden 24 entspricht. An dem Übergangselement 32 schließt sich sodann ein zylindrischer, insbesondere kreis-zylindrischer Ansatz 34 mit geringeren Außenabmessungen, insbesondere einem geringen Durchmesser, an. Die Außenabmessungen des zylindrischen Ansatzes 34 entsprechen den Innabmessungen des Gabelelements 12 im Bereich der Gabelenden 24, so dass die Ausfallend-Elemente 14 zur Verbindung mit dem Gabelelement 12 in die Gabelenden 24 eingesteckt werden können. Die Verbindung erfolgt vorzugsweise durch Verkleben. Ferner kann ggf. zusätzlich zu einer klebenden Verbindung eine Ummantelung der Gabelenden 24, sowie des Übergangselement 32 mit Prepregs erfolgen. Die Ummantelung erfolgt somit in einem Bereich 36 (Fig. 2).

Zum Verbinden des Gabelschafts 10 mit dem Gabelelement 12 erfolgt in besonders bevorzugter Ausführungsform ein Vorsehen von Fasermaterial in einem Verbindungsbereich 38, wobei der dargestellte Verbindungsbereich 38 einen Verbindungsbereich der Gabelbrücke 22, sowie das in Richtung der Gabelbrücke 22 weisende Ende des Gabelschafts 10 umfasst.

## Patentansprüche

1. Fahrradgabel aus im wesentlichen Faserkunststoffverbund-Material, insbesondere kohlenstofffaserverstärktem Kunststoff, mit
einem Gabelschaft (10) aus Faserkunststoffverbund-Material und
einem unabhängig von dem Gabelschaft (10) hergestellten Gabelelement (12) auf Faserkunststoffverbund-Material, wobei das Gabelelement (12) eine mit zwei Gabelbeinen (20) verbundene Gabelbrücke (22) aufweist.

2. Fahrradgabel nach Anspruch 1, **dadurch gekennzeichnet, dass** die Gabelbrücke eine glatte Außenkontur aufweist, insbesondere einen kreisringförmigen, ovalen und/ oder elliptischen Querschnitt aufweist.

3. Fahrradgabel nach Anspruch 1 oder 2, **dadurch gekennzeichnet, dass** die Fasern des Faserkunststoffverbund-Materials in dem Gabelschaft (10) und/oder in dem Gabelelement (12) im wesentlichen unidirektional verlaufen.

4. Fahrradgabel nach einem der Ansprüche 1 bis 3, **dadurch gekennzeichnet, dass** die Fasern des Faserkunststoffverbund-Materials im Wesentlichen, insbesondere über 80% in Längsrichtung des Gabeischafts (10) verlaufen.

5. Fahrradgabel nach einem der Ansprüche 1 bis 4, dass die Fasern des Faserkunststoffverbund-Materials im Gabelelement (12) von einem Gabelbeinende (24) durch die Gabelbrücke (22) zum anderen Gabelbeinende (24) verlaufen.

6. Fahrradgabel nach einem der Ansprüche 1 bis 5, **dadurch gekennzeichnet, dass** der Gabelschaft (10) und/oder das Gabelelement (12) hohl ausgebildet sind.

7. Fahrradgabel nach einem der Ansprüche 1 bis 6, **dadurch gekennzeichnet, dass** der Außenumfang des Gabelschafts (10) in Richtung der Gabelbrücke (22) zunimmt, wobei der Gabelschaft (10) vorzugsweise einen kegelstumpfförmig ausgebildeten Bereich (18) aufweist.

8. Fahrradgabel nach einem der Ansprüche 1 bis 7, **gekennzeichnet durch** ein Verbindungselement zum Verbinden des Gabelschafts (10) mit dem Gabelelement (12).

9. Fahrradgabel nach Anspruch 8, **dadurch gekennzeichnet, dass** das Verbindungselement ein in Richtung der Gabelbrücke (22) weisendes Ende des Gabeischafts (10) zumindest teilweise umgibt, und sich in einen Verbindungsbereich (38) der Gabelbrücke (22) erstreckt.

10. Fahrradgabel nach Anspruch 8 oder 9, **dadurch gekennzeichnet, dass** das Verbindungselement Faserkunsirsfoffverbund-Maferial aufweist.

11. Fahrradgabel nach einem der Ansprüche 1 bis 10, **gekennzeichnet durch** gesondert hergestellte Ausfallend-Elemente (14), die mit dem Gabelbeinenden (24) verbunden, insbesondere verklebt sind.

12. Fahrradgabel nach Anspruch 11, **dadurch gekennzeichnet, dass** die Ausfallend-Elemente (14) einen zylindrischen Ansatz (34) aufweisen, der zum Verbinden in die Gabelbeinenden (24) einsteckbar ist.

13. Verfahren zur Herstellung einer Fahrradgabel aus im wesentlichen Faserkunststoffverbund-Material, insbesondere kohlenstofffaserverstärktem Kunststoff, mit den Schütten
- Formen eines Gabeischafts (10) aus Faserlaminat,
- Formen eines gesonderten Gabelelements (12) aus Faserlaminat, wobei das Gabelelement (12) ein Gabelbrücke (22) und zwei Gabelbeine (20) umfasst, und
- Verbinden des Gabelschafts (10) mit der Gabelbrücke (22) des Gabelelements (12).

14. Verfahren nach Anspruch 13, wobei der Gabelschaft (10) und/oder das Gabelelement (12) hergestellt werden durch
- Umgeben eines Kernelements mit Fasermaterial,
- Einbringen des mit Fasermaterial umgebenen Kernelements in ein Formwerkzeug,
- Aushärten des Fasermaterials, und
- Entnehmen des Gabelschafts (10) bzw. des Gabelelements (12) aus dem Formwerkzeug.

15. Verfahren nach Anspruch 14, bei welchem das Kernelemente während des Aushärtens Druckkräfte auf eine Innenfläche des Gabelschafts (10) bzw. des Gabelelements (12) aufbringt.

16. Verfahren nach Anspruch 14 oder 15, bei welchem das Kernelement zum Aufbringen von Druckkräften aufgeblasen wird, insbesondere eine Luftkammer ausweist.
